# EUROPEAN PATENT APPLICATION

(11) **EP 3 654 659 A1**
(43) Date of publication of application: **20.05.2020**
(21) Application number: 18206104.4
(22) Date of filing: 14.11.2018
(51) Int. Cl.: H04N 21/462, H04N 21/433, H04N 21/482

(54) **SYSTEM AND METHOD FOR A MEMORY-EFFICIENT ELECTRONIC PROGRAM GUIDE**

(71) Applicant: Advanced Digital Broadcast S.A., 1293 Bellevue (CH)
(72) Inventor: Polak, Micha, 65-119 Zielona Gora (PL)
(74) Representative: Blonski, Pawel

(57) **Abstract**

Method for a memory-efficient electronic program guide wherein electronic program guide data are collected from more than one source, the method comprising the steps of: (a) processing electronic program guide data by an event handler wherein each of said sources (205, 206, 207) has a separate event handler (237) assigned whereas a common, local data model (231, 304) is maintained for events regardless of their source and original data format; (b) filtering the received electronic program guide data so that only a single event for a given service and time period is present in the receiver's local database (231); (c) executing a process of determining the current and next events' pairs based on the received electronic program guide data; (d) when all available electronic program guide data have been processed, awaiting a trigger (301, 302) requesting electronic program guide data update and repeating steps (a) - (d).

## Description

### TECHNICAL FIELD

The present invention relates to a system and method for a memory-efficient electronic program guide (EPG). In particular, the present invention relates to data retrieval and subsequent memory management concerning EPGs management in a client device such as a Set-Top Box (STB).

### BACKGROUND OF THE INVENTION

An STB is typically provided with an EPG module that receives EPG data from external head-ends by means of one or more uni- or bidirectional communication links, for example satellite, cable, terrestrial or IP.

EPG data, provided via these channels, may be delivered in various formats such as TS/EIT sections, TS/private sections or the like. EPG data include events (programmes) for a number of services (TV or radio channels). EPG data, for a given service, may comprise events that appear more than once, i.e. they have the same values of start times and duration. Examples include: DVB EIT sections with schedule and present/following information (as per ETSI EN 300 468 specification), private sections with EPG data (in an operator/provider-defined format), all that information can be supplied to the STB in parallel.

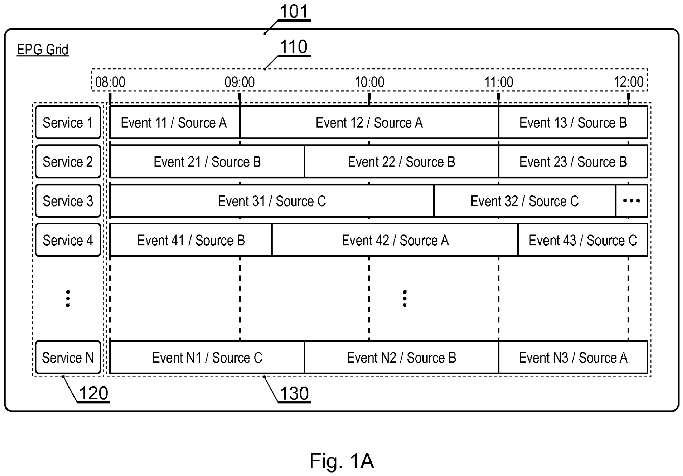

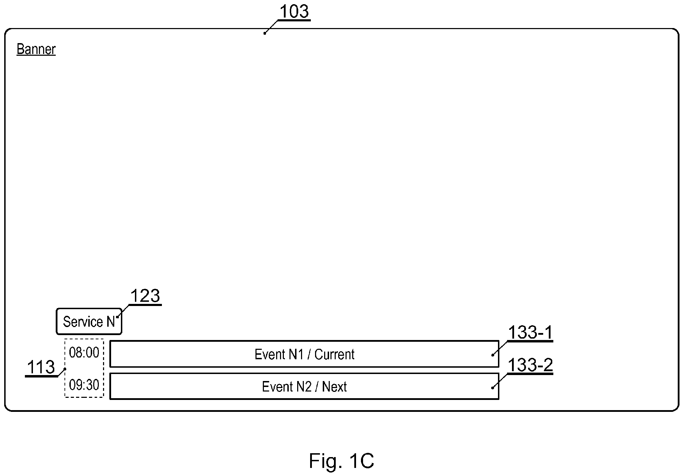

Although the same EPG data may be available from a number of sources, a GUI (Fig. 1A, 101) presents EPG events using an EPG Grid or list without any duplicates of the same events 130 (i.e. referring to the same service 120 and having the same values of the start times).

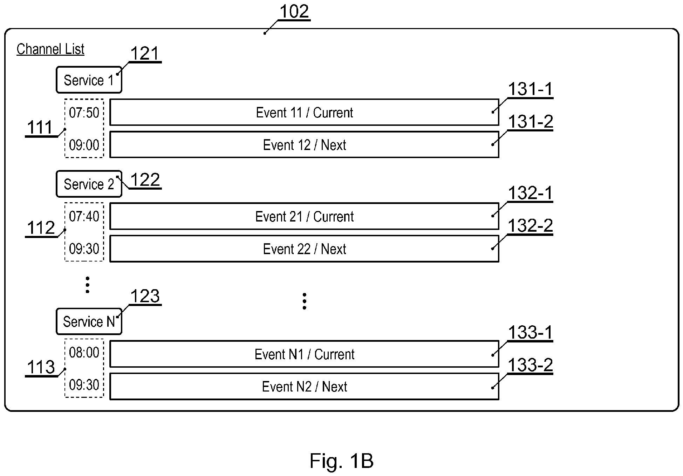

Additionally, as shown in Fig. 1B, the GUI in a form of Channel List 102 usually displays information about the current and next events 131, 132, 133 for a given service 121 - 123, by rendering of a service list screen comprising, for instance, a subset of services with their number and names plus titles, start and end times 111 - 113 of the present and next events associated with the services being presented on the screen.

Again, such information must be presented to a user without duplicates, also in cases when current and next events are not signaled explicitly - for instance, there are not any DVB EIT present/following sections, only private EPG information available that does not indicate, which events are current and next at a time, or there are both DVB EIT present/following sections and private EPG information available at the same time, while the private EPG data is of higher priority (it shall be displayed instead of the DVB EIT information), still the private EPG information does not signal explicitly current and next events at a given time. Specific examples of the EPG Grid 101, Channel List 102 and Banner 103 are depicted in Figs 1A - 1C.

Prior art defines two main approaches to EPG data retrieval and storage. The first one is collecting all EPG data available from individual, accessible sources at a given time. This results in that a plurality of events (data records) for the same service and programme (start time, duration) may exist in parallel.

The above results in a problem with a presentation of such data because a GUI should present only one instance of such events, as there is not any reason to let the user alternate between various events' instances - which are likely to comprise the same information as the event's title or description. Undoubtedly, such an approach leads to unneeded memory usage.

The other method is aimed at retrieving EPG data when it is actually needed. This includes such cases as collecting EPG information from a transport stream with the service being currently watched, while releasing all that data when tuning to another transport. In case of an IP source, EPG information is retrieved on-the-fly from a remote head-end when the GUI is about to display it.

Both these approaches come with disadvantages. The first tends to overuse scarce resources like memory (to store EPG data) and the CPU's processing power (to collect and handle EPG data), while the other may result in presenting the information with a delay or not at all if communication with an IP EPG head-end fails. If a programme of the service that has just been selected is for an adult audience, it may happen that the service's content may either be presented to the user even if the STB's parental settings disallow that, or the content shall be available after an additional delay, when the EPG information has been retrieved. Furthermore, the same data can be retrieved and processed many times, if it is not cached. Collecting all data from all available sources for further processing and merging into a common database is ineffective in terms of memory and CPU time usage.

There are also other issues with these approaches - presenting information about both the current and next events (especially through the Channel List or Banner) of individual services requires usually searching memory for events with their start times' values in the past, but which have not finished yet. The next event is just the subsequent one following the current event. While such indicating of current/next events is straightforward with DVB EIT Present/Following tables, it becomes a more complex task with an EPG provider's private data, which usually does not comprise any information enabling to retrieve current/next events directly. The same problem may occur with IP-sourced EPG data, unless the IP EPG head-end supports a command to download such information directly (what, on the other hand, means the head-end must be more sophisticated/complex and with sufficient processing power).

Additionally, searching for EPG events, especially in a full-text-search (FTS) manner with presentation of suggestions while entering a text, requires that in case of broadcast data as much as possible EPG events have been collected and indexed or the IP EPG head-end supports such search command (in the latter case results from local and remote EPG databases are merged locally). In order to provide such an advanced searching feature, again, events are expected not to be duplicated so as to keep memory usage on the lowest possible level while also to provide valid and high quality results without the same data presented more than once.

In many STB applications, retrieving and processing EPG events is handled by higher layers of the STB software stack, sometimes even by the GUI. This entails that in case of replacing the GUI or a need to expose the EPG data within a home network (multiroom, multiscreen), the same functionality would have to be implemented in software one or more times. With today's commercial requirements such an approach is not acceptable as the time to market must be as short as possible.

It would be advantageous to address the aforementioned problems and provide an improved system and method for a memory-efficient electronic program guide.

### SUMMARY AND OBJECTS OF THE PRESENT INVENTION

An object of the present invention is method for a memory-efficient electronic program guide wherein electronic program guide data are collected from more than one source, the method comprising the steps of: (a) processing electronic program guide data by an event handler wherein each of said sources has a separate event handler assigned whereas a common, local data model is maintained for events regardless of their source and original data format; (b) filtering the received electronic program guide data so that only a single event for a given service and time period is present in the receiver's local database; (c) executing a process of determining the current and next events' pairs based on the received electronic program guide data; (d) when all available electronic program guide data have been processed, awaiting a trigger requesting electronic program guide data update and repeating steps (a) - (d).

Preferably, said event handlers operate according to different electronic program guide data coding types.

Preferably, whenever a change is introduced in the database, all clients, are notified.

Preferably, aid database is an SQL-type database.

Preferably, before to download the method is configured to execute a step that verifies whether the event handler is allowed to retrieve electronic program guide data for a given service and a predefined time range.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

### BRIEF DESCRIPTION OF THE DRAWINGS

These and other objects of the invention presented herein, are accomplished by providing a system and method for a memory-efficient electronic program guide. Further details and features of the present invention, its nature and various advantages will become more apparent from the following detailed description of the preferred embodiments shown in a drawing, in which:
Figs. 1A-C present examples of EPG information displayed by a GUI;
Figs. 2A-B present an overview of an EPG system;
Figs. 3A-B present individual steps of EPG data reception; and
Figs. 4A-C present individual steps of marking events as current / next and clearing such a flag.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

As utilized herein, the term "example" means serving as a non-limiting example, instance, or illustration. As utilized herein, the terms "for example" and "e.g." introduce a list of one or more non-limiting examples, instances, or illustrations.

### DESCRIPTION OF EMBODIMENTS

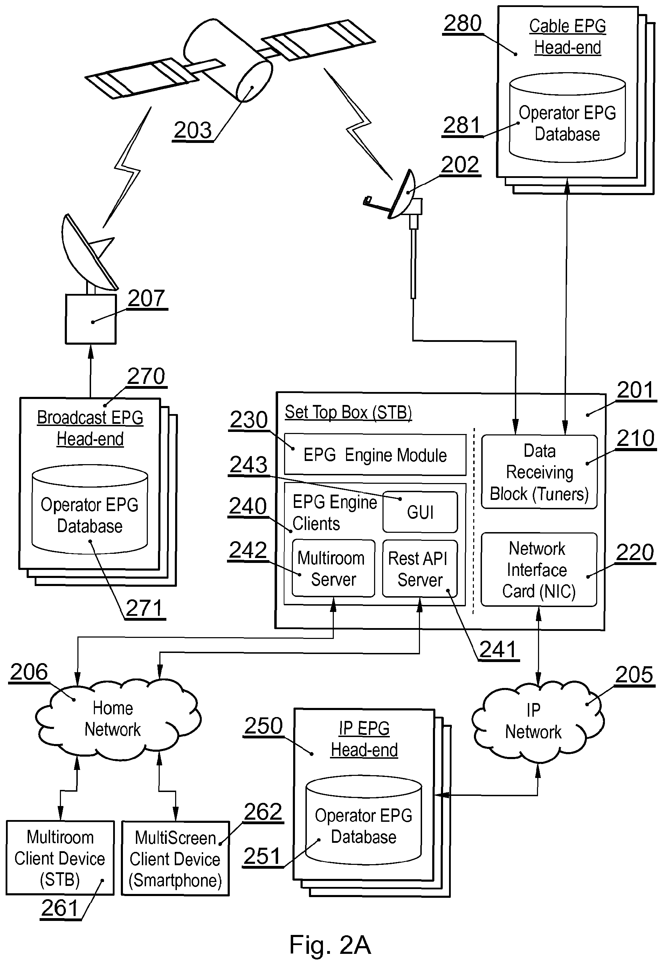

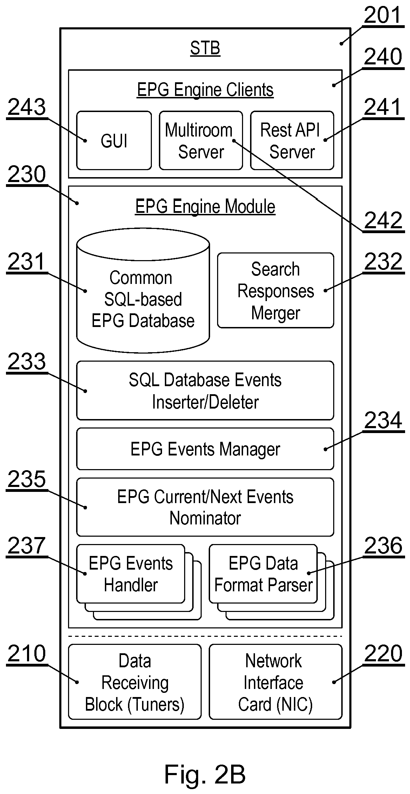

Figs. 2A-B present an overview of an EPG system. The present invention introduces a number of features aimed at low memory usage while providing to the GUI non-duplicated events covering a wide range of services and period with no or low latency. EPG data is provided from respective operator's databases 251, 271, 281 and received by an EPG engine module 230 using suitable communication links 210, 220.

These features include an EPG Events Manager 234 that decides where the EPG events are retrieved from (sources as broadcast - satellite 270, cable 280, terrestrial - or IP 250), uses an EPG Events Inserter/Deleter 233 module to ensure non-duplicated EPG data is available for consumers like an STB GUI 243, multiroom client STBs 261 or multiscreen devices 262.

A Current/Next Events Nominator module 235 is responsible for providing a pair of the current and next event for each service regardless if such information is provided by a given source within its event data.

The system retrieves EPG data from one or more sources 250, 270, 280. It is worth noting that also one source is possible, although there may be more than one data formats available for that single source, for instance DVB EIT TS sections and an EPG provider's private TS sections. EPG events from unidirectional links like broadcast are retrieved whenever it is possible and required.

To this end, EPG data may be collected passively, for example when a transport has been connected to because the user is watching or listening to a service or the STB monitoring system has tuned to a given transport because another module is looking for a new firmware, checking whether there are new versions of service lists, etc.

EPG data may be also retrieved explicitly; this refers mainly to an EPG provider's data broadcast usually in a proprietary format (i.e. private TS sections) and on limited number of transports (even on a single one). If the STB EPG module 230 has detected that the private data has not been collected yet or it is not up-to-date, the GUI is notified about that state.

Then, when a user presses down a remote control's key to display, for example, the EPG Grid, the application tunes to a transport with the private EPG data so that it could be downloaded. When all data has been collected and processed in parallel, the GUI is informed the transport is not needed any more (until the next EPG update), so the GUI could re-select the previously presented service available on another transport

In case of IP-sourced events, they may be downloaded only partially, for example only for today and tomorrow and possibly yesterday if features like catch-up are available. EPG events for other days may be then downloaded on-demand, i.e. when the GUI is about to display EPG events for further days through EPG Grid or List screens. Such on-demand events are deleted when the EPG screen is closed by the user to reduce memory consumption.

However, in some applications it may be reasonable to collect all events over the IP communication channel, especially when they cover a small range of days (for example up to 3) or they are in a format that needs extensive processing (for instance a binary format embedded within private TS sections exposed through encrypted and compressed files on an IP EPG head-end without support for the FTS searching).

Collecting data from some sources may be blocked if data from another source is available, depending on the sources' priorities. This means that unneeded data are not collected - there is not any idle processing of aggregated EPG data. An example include avoid collecting EIT sections for selected services if EPG data from that services has already been retrieved from an EPG provider's private data.

Prior to inserting collected EPG data into a database 231, possibly existing events for a given service and time range covering the collected events are removed, so that duplicates do not occur. This is a case when it was not previously possible to collect EPG data for a give set of services and timeframe, due to it unavailability for example, which may have resulted in collecting these data from other, supplementary sources. This means also that there are not any conflicts between EPG events from various handlers - instead, as mentioned already above, data that is not needed (for example because of lower priority) is not retrieved. Again, this entails that memory or CPU time are not uselessly consumed. Whenever a change within the database 231 is introduced, all clients, like the GUI (240, 241, 242, 243), are notified.

In order to provide a list with current/next events for all known services, the events must be monitored locally 235 and marked with current or next flags (one of them for an event at a time; also past and future flags can be introduced for other events). Events with the current or next flag set on can be directly retrieved from the local database and presented by the clients without any need to determine such events. Since the submodule responsible for setting these flags 235 monitors inserting and deleting events as well as expiration of current events, it ensures that individual EPG events are always correctly marked with these flags.

Because events are kept in the SQL database 231, they can be easily searched, also in a FTS manner. A client may ask for events satisfying sophisticated criteria, not just a service and a time range, but also - for example - the event's title or key words found in its title, description or persons' names who contributed to a given event (actors, director, and so on). Of course, searching by an event's genre (movie, news, kids, etc.) or subgenre (movie: drama, action, ...) is also feasible. Similarly, the user may enter first few letters to let the FTS engine suggest further letters and whole words. In case some events are available on-demand only (remotely) the local FTS merger will join local results with these supplied by the external IP EPG head-end.

Since all EPG data management and EPG information is handled in the middleware layer, it is available for other clients, not just for the local GUI. Furthermore, because all EPG data is kept in the same local database 231, this entails that the data model of EPG events is common for all EPG handlers, regardless of the internal format of EPG data processed by a give handler. This entails that there is not any need to alter EPG clients, when a new EPG handler is added, as they are based on the unchanged data model. Of course, when the data model is extended with a new property (e.g. an URI to an event's trailer) a client that wants to support it must be extended to handle the new property.

The STB EPG system comprises a number of EPG events handlers 237, which receive EPG data from one or more sources. A single source (e.g. a satellite distribution channel) with two or more handlers (e.g. DVB EIT and private TS sections) is a valid configuration. It is up to the event manager to decide from which event handlers EPG information is retrieved, depending on a given event handler's priority.

A handler understands a given format, for example EIT sections, a provider's private EPG TS sections, another provider's private EPG data in JSON format. EPG data in some formats can be available from various sources, so a handler can process events - for instance - from broadcast and IP sources. An example includes TS EPG private sections broadcast over satellite as well as exposed by means of an EPG IP head-end as files.

EPG events are retrieved and processed by a handler 237 only if events have been updated on the head-end (or are retrieved for the first time) and are not available for a given service from another event handler of a higher priority. Only EPG data that shall be actually added into the database is retrieved - the system does not download all EPG data for further processing and merging into the database.

When a range of events is to be inserted into the local database, these events are grouped into a set of time ranges. For each of these time ranges a deleting action is carried out on the database to avoid possible duplicates of events from many sources and unneeded memory waste. This means that conflicts between events from different handlers (and sources) do not occur, and hence the system requires a relative small amount memory and CPU time to operate.

Also, there are not executed any checking actions against existence of events in the database, in order to avoid additional access to the database (again, to save the CPU time), as it is expected that events have already been added to the database with a previous version (an exception is the STB's cold start). If a given handler provides additionally current and next events (for example the EIT sections handler), then current and next events are optionally not removed from the database. Such a configuration enables to consider the current/next events as being more important than the standard schedule ones. This is reasonable, as current/next events (or present/following in DVB EIT nomenclature) are updated more frequently and on an event's start time boundaries.

In case of some handlers 237, it may be required to establish a dedicated link, for example to tune to specific transport on a given satellite or connect in a secure way to an IP head-end. In such a case the handler sets a flag for the GUI, e.g. because the EPG data is considered as out-of-date. When the GUI is about to display EPG events, it checks the flags and, for example, performs explicit tuning to the transport to let the handler retrieve EPG data. If the GUI does not carry out such an action, events from a handler with a lower priority are presented, if available.

Finally, when the EPG data is ready to be inserted into the local database it is directed to one of two action queues: high and low priority. The high priority queue is - in general - destined for events being close to the current time, as to ensure such events can be displayed by the client faster than events for other days (a user usually navigates among events close the current time), especially when a huge amount of EPG events is being processed. The method described above enables to keep in the database events from many sources and event handlers even for a single service without any duplication, hence with minimal memory requirements and without additional CPU power utilization.

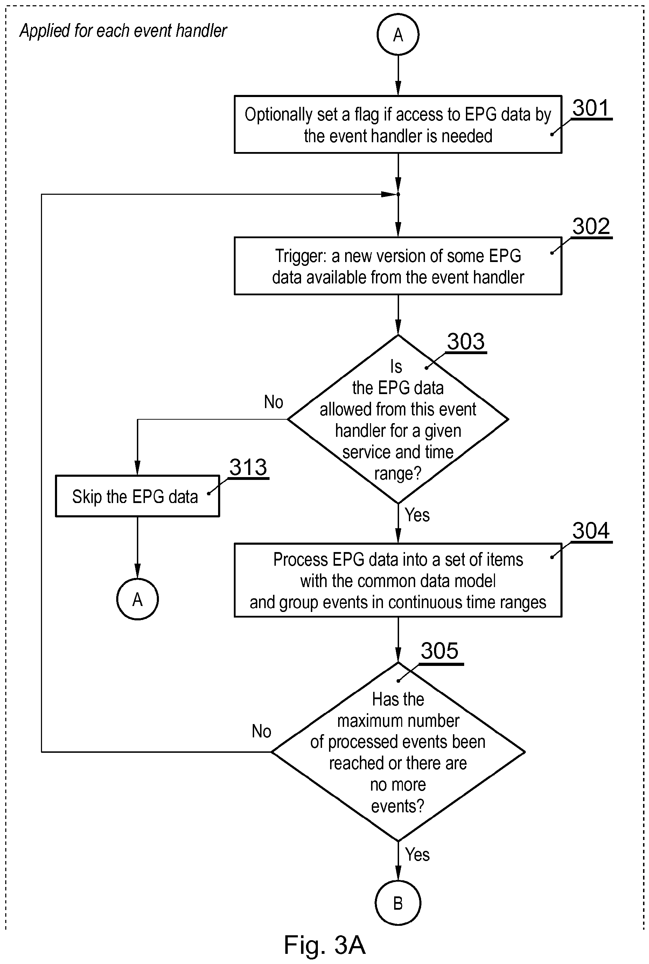

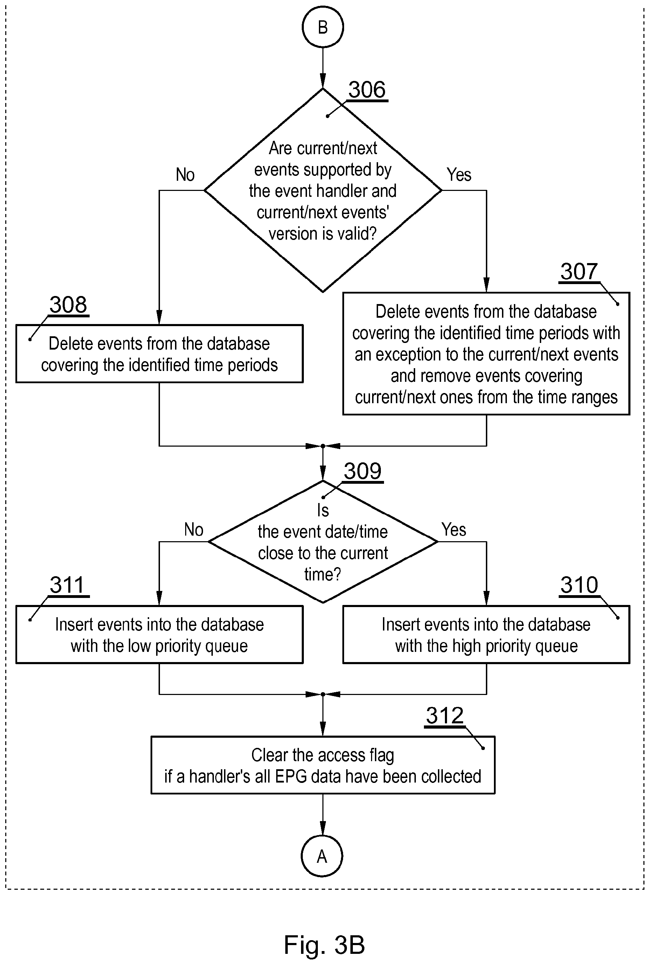

Individual steps of EPG data reception, by an event handler 237, are shown with reference to Figs. 3A-B. This method's steps are applied for each event handler 237 independently.

At step 301 the process optionally sets a flag indicating if the event handler has requested access to EPG data. If it has, a client - for example - a GUI may ensure the EPG data can be retrieved by the event handler for example when EPG Grid is being displayed. This may result for example in tuning to a transport with the required EPG information; this action may also cause that the currently presented service is closed and reopened once the required data has been retrieved or this action was interrupted for example because the user left the EPG Grid screen; in such a case the previously presented service, if any, is reopened. The event handler may request access to data periodically, for example once a day, to ensure the EPG information is up-to-date.

Next, at step 302, the method awaits a trigger signaling that a new version of some EPG data from the respective event handler 237.

Subsequently, at step 303, the process verifies whether the event handler 237 may retrieve EPG data for a given service and the time range. For example, a given event handler may provide EPG data only for a subset of services and only for a specified time range. Such EPG data is retrieved only if there is not any EPG information from another event handler with a higher priority. In case the check of step 303 is confirmed, the method moves to step 304, where EPG data are processed into a set of items with a common data model and events are grouped in continuous time ranges. Otherwise, when data retrieval is not allowed at step 303, the process moves to step 313 where the respective data set is skipped and the process returns to the initial step.

Next, at 305, it is checked whether the maximum number of processed events has been reached in a processing buffer or there are no more events available with the current version. In case the condition is not fulfilled, the process returns to step 302. Otherwise, at 306, it is verified whether the current/next events are supported by the event handler and if there are valid - their version is up-to-date, which is known to the event handler. In other words, an EPG event retrieved by the event handler may explicitly classified as current/next event.

An example includes present/following events retrieved from EIT sections, which are expected to overwrite schedule events covering the same time period for a given service. However, an extension to this method may support a configuration setting that allows or disallows replacing of already collected events by explicit current/next events. For the aforementioned example, the present/following events would replace (or not) the scheduled events, depending on a value of the configuration setting.

In case the answer is negative, at step 308 the system deletes events from the database 231 covering the identified 304 time periods. Otherwise, in case of a positive answer at step 306, the process moves to step 307 where there are deleted events from the database 231 covering the identified time periods with an exception to the current/next events and there are removed events covering current/next ones from the identified time periods. In other words, if the current or next event has been already collected from the event handler for a given service, it is not replaced with a newly received event if it is not explicitly a current or next one.

From step 307 and step 308, the method advances to step 309 (related to data insertion into the database, which follows the previous steps relating to database cleanup), where it is checked whether the event date/time is in proximity to the current time. This is possible since every event comprises metadata including the referenced date and time.

In case it is 310 adding events into the database 231 with the high priority queue. Otherwise, 311 inserting events into the database with the low priority queue.

The last step of the method 312 is to clear the access flag if a handler's all EPG data have been collected (this is a piece of information known to the particular event handler). An example of this behaviour is an event handler responsible for collecting EPG information broadcast as TS sections in an operator's proprietary (private) format, which enables to compute the number of sections that must be retrieved. On the other hand, in case of the EIT section event handler, such a flag is not used, as the EPG data is uninterruptedly collected, for example from the transport with the service being presented to the user.

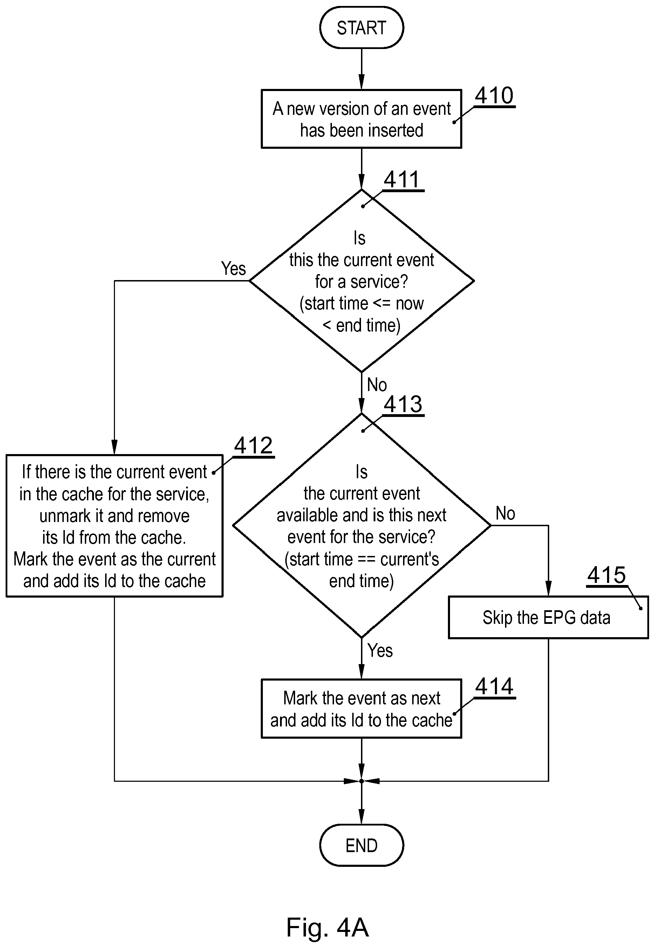

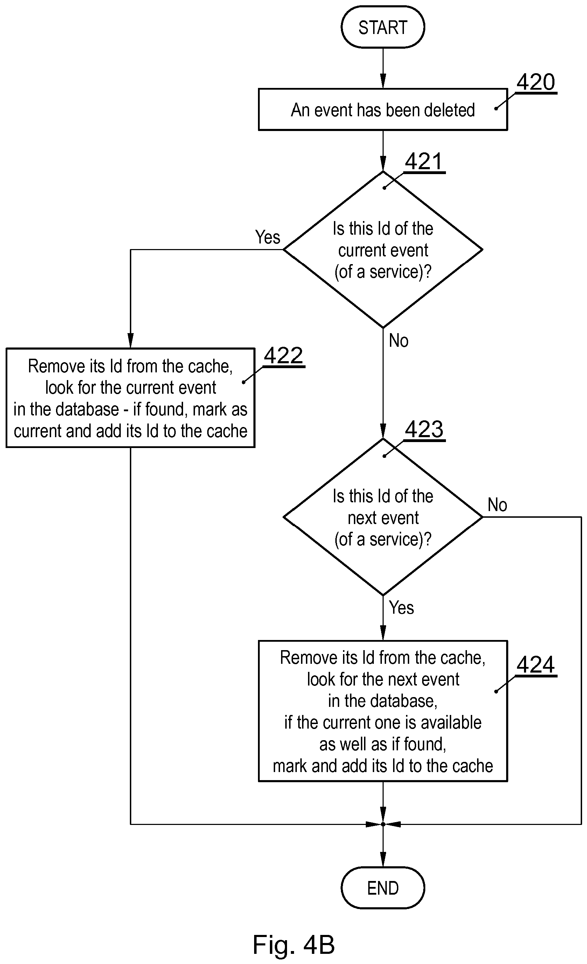

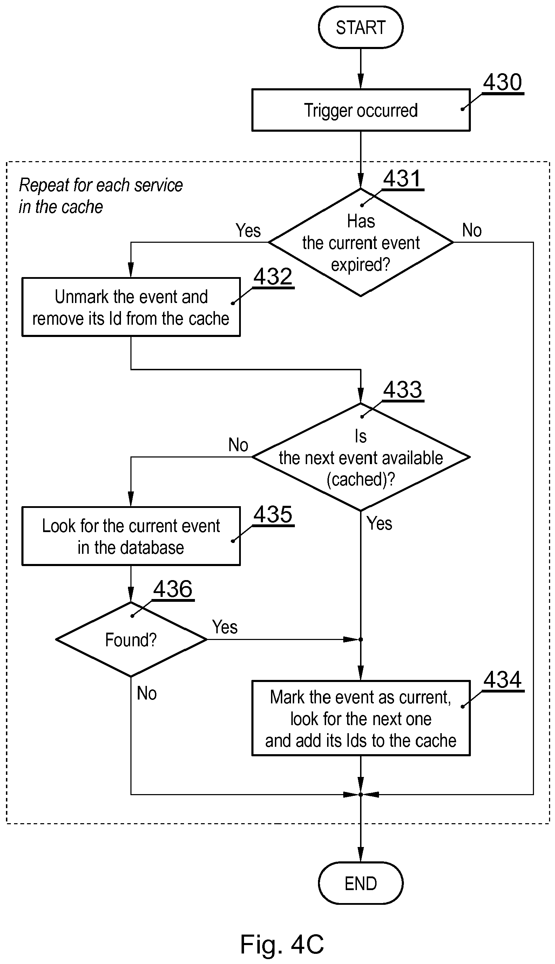

Figs. 4A-C present a method for marking events, belonging to a given service, as current and next ones or removing such a mark. This method is applied when an event has been inserted 410 into the database 231, removed 420 from the database 231, or a trigger 430 has occurred, because at least one event of any service has expired, that is it is not the current one any longer.

Most GUIs or other clients 240 present information about the current and next events of services. In case of EIT sections, such additional information is available through the Present/Following Events tables. However, in case of other sources it is usually not provided. In such cases the GUI (or each client) would have to monitor events in the database and nominate (mark) the current and next events for all services. Such an approach is ineffective in term of performance (the CPU time) and memory usage. Instead, the STB EPG system provides a common submodule 235 that is responsible for nominating individual handler's events as current or next ones. This enables the clients 240, including GUI, just to ask for all services (or subset of) with current/next events. That submodule 235 monitors events being inserted into the database and removed from it, as well it is triggered when a service's current event has expired, so that a new pair of current/next events could be found and respectively marked.

When a new version of a service's event has been inserted 410 into the database the check 411 is performed. When an event's start time is in the past 411, but the event's end time is still in the future, such an event is marked as "current" 412, while a possibly existing event already marked as current is unmarked and the process of Fig. 4A ends.

The subsequent event 413 to the current one (available in the database) is marked 414 as "next". To this end start and end time may be compared during verification of this condition. When the condition 413 is not met the event data is discarded 415.

The submodule 235 keeps a cache of current/next event identifiers 412 for all services. The cache operates in a volatile memory and it is independent from the SQL database, so that current/next event identifiers could be found, added, updated and removed in a time effective manner without blocking access to the SQL database. The cache's size is relatively small, as only two identifiers for each service are kept. When an event is removed 420 from the database 231, (the identifiers of removed events are provided by the events deleting action), its identifier can be also removed 422, 424 from the cache. When there is a lack of the next event for a given service (e.g. because it has been removed), the submodule 235 attempts to find 422, 424 any event available having its start time after the current event's end time (as not to show empty data with the next event, which can be also because of an EPG event provider).

When an update of the database occurs, the next event can be updated too. It may also happen, the current event is not available yet, while the next one is. This may happen with EPG data from handlers that support current/next events, e.g. DVB EIT-based. In general, the EPG Current/Next Events Nominator module does it best to ensure clients can show current and next events at any time.

When at least one current event of any service has expired the trigger 430 is invoked. Steps from 431 to 436 are applied for each service for which current/next events' identifiers are kept in the cache. At step 431 it is checked if the current event has expired, that is its end time has moved to the past. If the condition is not met, the method ends. Otherwise, at step 432 the event is unmarked (it is not the current one any longer), its identifier is removed from the cache and the method advances to step 433, where it is checked if the next event's identifier is known. When the next event's identifier is available, the method jumps to step 434 were the event is marked as the current one and the SQL database is searched for the new next one; if found, its identifier is added to the cache and the method ends. Otherwise, step 435 is reached where an attempt to find the current event in the SQL database is performed. If found at step 436, step 434 is executed, otherwise the method ends.

Therefore, determining current and next events is possible even if they are not supplied explicitly by a given event handler.

With the STB EPG system EPG data can be collected from a number of sources in various formats. Retrieving EPG data from two or more handlers from the same source is a valid case (an example include DVB EIT and private TS sections). Events retrieval is prioritized to ensure events do not occur in many instances in the local database. Such an approach enables avoiding wasting scarce resources like memory and CPU time (to store or process other instances of an EPG event) - there is not any need to process all possibly aggregated events from all handlers and merging them into the database by taking account an additional conflict resolution protocol.

On the other hand, there are always events in the database provided that at least one handler is capable of supplying them. Access to the database 231 is limited, for example events are removed based on the newly collected events' time ranges, without checking existence of the already inserted events - again, this entails that conflicts do not occur while inserting or replacing EPG events in the database is a simple and quick action. The system enables collecting EPG information in passive or active modes, by notifying the GUI that accesses EPG data from a transport or an IP link is requested. This lets the GUI inform a user about ceasing watching a selected service in order to retrieve EPG data, for example when an EPG List or Grid screen is being displayed.

The STB EPG system if provided with a submodule 235 aimed at marking events as current or next ones, even if such information is not available from an event source. This simplifies presenting current/next events by a GUI and, again, avoiding unneeded memory and CPU time utilization.

The same EPG information is available for other clients than GUI, enabling to expose it to multiroom and multiscreen devices within a home network. All EPG events fed by individual EPG events handers 237 follow the same data model, so there are not needed any changes in clients 240 (including a GUI) when a new events handler 237 is added to the STB EPG system (assuming there isn't any new property introduced).

The database 231 engine supports sophisticated queries including FTS-based ones. In case of multiple search responses (local and remote), the STB EPG systems is capable of merging them. Therefore, the invention provides a useful, concrete and tangible result.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for a memory-efficient electronic program guide may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for a memory-efficient electronic program guide wherein electronic program guide data are collected from more than one source, the method being **characterized in that** it comprises the steps of:
(a) processing electronic program guide data by an event handler wherein each of said sources (205, 206, 207) has a separate event handler (237) assigned whereas a common, local data model (231, 304) is maintained for events regardless of their source and original data format;
(b) filtering the received electronic program guide data so that only a single event for a given service and time period is present in the receiver's local database (231);
(c) executing a process of determining the current and next events' pairs based on the received electronic program guide data;
(d) when all available electronic program guide data have been processed, awaiting a trigger (301, 302) requesting electronic program guide data update and repeating steps (a) - (d).

2. The method according to claim 1 wherein said event handlers operate according to different electronic program guide data coding types.

3. The method according to claim 1 wherein whenever a change is introduced in the database (231), all clients (240, 241, 242, 243), are notified.

4. The method according to claim 1 wherein said database (231) is an SQL-type database.

5. The method according to claim 1 wherein before to download the method is configured to execute a step that verifies whether the event handler (237) is allowed to retrieve electronic program guide data for a given service and a predefined time range.

6. A computer program comprising program code means for performing all the steps of the computer-implemented method according to claim 1 when said program is run on a computer.

7. A computer readable medium storing computer-executable instructions performing all the steps of the computer-implemented method according to claim 1 when executed on a computer.
